# EUROPÄISCHE PATENTSCHRIFT

(11) **EP 2 986 186 B1**
(45) Veröffentlichungstag und Bekanntmachung des Hinweises auf die Patenterteilung: **20.03.2019**
(21) Anmeldenummer: 14716351.3
(22) Anmeldetag: 10.04.2014
(51) Int. Cl.: A47J 31/40

(54) **VERFAHREN ZUR STEUERUNG DES HEISSGETRÄNKEZUBEREITUNGSGERÄTS MIT KONTROLLIERTER DAMPFERZEUGUNG**
METHOD FOR CONTROLLING A HOT-DRINK PREPARATION APPLIANCE HAVING CONTROLLED STEAM GENERATION
PROCÉDÉ DE COMMANDE D'UN APPAREIL DE PRÉPARATION DE BOISSONS CHAUDES À GÉNÉRATION DE VAPEUR CONTRÔLÉE

(30) Priorität: 19.04.2013 DE 102013207181
(43) Veröffentlichungstag der Anmeldung: 24.02.2016
(73) Patentinhaber: BSH Hausgeräte GmbH, 81739 München (DE)
(72) Erfinder: BAUMGART, Stefan, 83308 Trostberg (DE); DABURGER, Josef, 83313 Siegsdorf-Hammer (DE); SCHNELLINGER, Christian, 83379 Wonneberg (DE); SCHOLZ, Florian, 83278 Traunstein (DE)
(86) Internationale Anmeldenummer: PCT/EP2014/057274
(87) Internationale Veröffentlichungsnummer: WO 2014/170205

(56) Entgegenhaltungen:
- WO-A1-2008/092734
- WO-A2-2012/093269
- DE-A1-102007 032 288
- US-A- 4 083 295

## Beschreibung

Die Erfindung betrifft ein Verfahren zur Steuerung eines Heißgerätezubereitungsgerät, insbesondere eines solchen für Haushaltszwecke, mit einer Heizung für Wasser, mit einer Pumpe zum Fördern des Wassers innerhalb des Zubereitungsgeräts mit wenigstens einem Temperatursensor zur Erfassung zumindest der Temperatur des Wasserstrom ab der Heizung und mit einer Steuerungseinrichtung zur Steuerung der Heizung und der Pumpe. Als Heizung des Zubereitungsgeräts kann z. B. ein Thermoblock, ein Durchlauferhitzer oder eine Kombination aus beidem eingesetzt werden. Die Pumpe kann bei aufwendigen Zubereitungsgeräten durch einen Wasseranschluss an das Haushaltswassernetz gesetzt sein und dadurch entfallen. Die Steuerungseinrichtung steuert die Heizung und die Pumpe, die gegebenenfalls aber zeitweise auch nur eines von beiden. Dazu kann sie neben Benutzereingaben insbesondere Signale des Temperatursensors verarbeiten.

Es ist bekannt, dass Zubereitungsgeräte, insbesondere solche, die Teegetränke und Kapseln verarbeiten, ihr System und die Getränkekapsel durch einen Dampfstoß entleeren. Eine derartige Einrichtung zeigt die Anmeldung des Erfinders mit der Nummer DE 10 2007 005 105 A1. Vergleichbare Geräte und Verfahren sind z.B. aus der WO2012/093269 A2, der WO 2008/092734 A1 und der DE 10 2007 032288 A1 bekannt.

Der Dampfstoß entsteht durch Stoppen der Pumpe nach der Getränkezubereitung durch die in der Heizung gespeicherte überschüssige Energie. Die Intensität des Dampfstoßes kann durch den Ausscheidzeitpunkt der Heizung verändert werden. Nach der werkseitigen Justage der Stärke des Dampfstoßes kann dieser jedoch durch Gerätetoleranzen oder einen Verkalkungsgrad der Heizung verändert werden.

Aufgabe der Erfindung ist es daher, ein System anzugeben, das eine gleich bleibende Intensität des Dampfstoßes über die gesamte Lebensdauer des Zubereitungsgeräts ermöglicht.

Diese Aufgabe wird bei einem eingangs genannten Verfahren zur Steuerung eines Heißgetränkezubereitungsgeräts erfindungsgemäß durch die kennzeichnenden Merkmale des Patentanspruchs 1 gelöst.

Die Erfindung wendet sich also davon ab, unabhängig von den tatsächlich vorliegenden Temperaturverhältnissen einen quasi standardisierten Energieaufwand bzw. weitgehend gleich bleibenden Festbetrag an Energie zur Erzeugung des Dampfstoßes aufzuwenden. Sie verfolgt erfindungsgemäß das Prinzip, ausgehend von der nach Abschluss eines Brühvorgangs vorliegenden Temperatur in der Heizung nach Erfassen der Temperatur gezielt Heizenergie bis zur Bildung von Dampf einzuleiten. Erfindungsgemäß wird also auf den konkret vorliegenden Temperaturverhältnissen aufgesetzt und gezielt ein Temperaturprofil erzeugt, indem beispielsweise durch eine Verfahrensschleife die Dampftemperatur erreicht wird. Die Verfahrensschleife kann aus dem wiederholten Ablauf der Schritte des Erfassens der Temperatur des Zubereitungswassers und dem anschließenden Aufheizen des Wassers um einen bestimmten Betrag bestehen. Zugleich mit dem Temperaturprofil wird ein Druckprofil generiert, ohne dass es auf den vorangegangenen Durchfluss durch die Heizung bzw. der darin gespeicherten Restenergie angewiesen wäre. Davon macht sich das erfindungsgemäße Verfahren also unabhängig, so dass störende Einflüsse, wie beispielsweise Fertigungstoleranzen oder der Verkalkungsgrad der Heizung das angestrebte Temperatur- und Druckprofil nicht negativ beeinflussen.

Erfindungsgemäß können also das Erfassen der Temperatur des Zubereitungswassers und das Aufheizen des Wassers mehrmals hintereinander ablaufen, bis schließlich die gewünschte Temperatur zur Dampfbildung erreicht ist. Nach einer vorteilhaften Ausgestaltung der Erfindung kann nach dem Erfassen der Temperatur des Zubereitungswassers in Schritt a) und vor dem Schritt b) in einem dazwischen liegenden Schritt k) eine Temperaturdifferenz zwischen der erfassten Temperatur und der angestrebten Dampftemperatur des Zubereitungswassers bestimmt werden. Aus der erfassten Temperaturdifferenz lässt sich derjenige Energiebetrag errechnen, der zum Aufheizen des Zubereitungswassers bis zur Dampfbildung erforderlich ist. Daraufhin kann im Schritt b) das Wasser gezielt auf Dampftemperatur gebracht werden, ohne eine Schleife mit zwischengeschalteten Schritten zur Temperaturerfassung durchlaufen zu müssen. Dadurch kann der Verfahrensablauf beschleunigt werden.

Aufwendigere Zubereitungsgeräte umfassen nicht nur einen Temperatursensor, nämlich stromab der Heizung, sondern einen zweiten Temperatursensor stromauf der Heizung. Bei diesen Zubereitungsgeräten kann das oben genannte Verfahren dadurch variiert werden, dass ggf. noch während des Brühvorgangs im Schritt a) sowohl eine Eingangstemperatur des Wassers stromauf der Heizung als auch dessen Ausgangstemperatur stromab der Heizung erfasst wird, daraus in einem anschließenden Schritt r) eine Differenz gebildet wird, die in einem weiteren daran anschließenden Schritt s) mit der dafür investierten Heizenergie ins Verhältnis gesetzt wird und daraus die erforderliche Heizenergie für den anschließenden Schritt b) zum Aufheizen des Wassers bis zur Dampferzeugung ermittelt wird. Dieses Verfahren bietet eine noch höhere Genauigkeit, weil es den erforderlichen Energieaufwand in Abhängigkeit von der tatsächlich vorliegenden Heizleistung erfasst. Damit können sowohl Fertigungstoleranzen bei der Herstellung der Heizung und damit deren Leistungsabweichung gegenüber anderen, vergleichbaren Heizungen ausgeschaltet werden, als auch ein eventuell vorliegender aktueller Verkalkungsgrad. Das Verfahren erzielt damit eine höhere Genauigkeit der Dampferzeugung, was sich einerseits einer angemessenen, eventuell kürzeren, gegebenenfalls auch längeren Verfahrensdauer und andererseits in einem angemessenen Energieaufwand niederschlagen kann.

Das zuletzt beschriebene Verfahren erfordert einen gewissen technischen Aufwand, der das Zubereitungsgerät verteuern kann. Nach einer weiteren vorteilhaften Ausgestaltung der Erfindung kann daher alternativ oder zusätzlich vor der Erfassung der Temperatur in Schritt a) in einem Schritt o) die Heizung abgekühlt werden, indem die Pumpe zeitlich nach der Heizung abgeschaltet wird. Nach Abschalten der Heizung und einem Aufrechterhalten des Durchflusses durch die Heizung, nimmt das kühle Frischwasser die verbleibende Restenergie in der Heizung auf. Insbesondere bei einem massearmen Durchlauferhitzer erfolgt dadurch ein Temperatureinbruch. Daraufhin wird auch die Pumpe ausgeschaltet, so dass das dann stehende Wasser die übrige Heizenergie aufnimmt. Dieses als "early off" bezeichnete Verfahren bietet den Vorteil, dass es einen weitgehend definierten, jedenfalls stabilen Druck- und Temperaturzustand unterhalb der Dampftemperatur bzw. unterhalb des Dampfdrucks erzeugt, von dem ausgehend sich ein Standardprogramm für die Schritte a) bis c) zur Dampferzeugung anschließen kann.

Nach einer weiteren vorteilhaften Ausführungsform des erfindungsgemäßen Verfahrens kann vor dem Schritt a) in einem Schritt n) die Restenergie der Heizung ermittelt werden, indem die Temperaturentwicklung und/oder der Durchfluss des Wassers und/oder die in das Wasser eingebrachte Heizleistung erfasst wird. Die Temperaturentwicklung der Heizung lässt sich durch ständiges oder schrittweises Messen der Temperatur erfassen. Den Durchfluss des Wassers durch die Heizung kann ein Durchflussmesser bzw. Flowmeter erfassen. Alternativ kann er nach einem Verfahren gemäß der Anmeldung DE 10 2011 079 542 B1 bzw. DE 10 2013 201 180 des Anmelders berechnet werden. Er kann gegebenenfalls konstant eingestellt sein, falls anstelle einer Pumpe ein Festwasseranschluss genutzt wird. Die Heizleistung schließlich lässt sich als elektrische Größe am Eingang der Heizung ermitteln. Ist nur einer dieser Messwerte bekannt, lassen sich die übrigen Größen berechnen. Mit ihrer Kenntnis wiederum lässt sich die Abkühlleistung der Heizung bestimmen, so dass sich eine Schleife vergleichbar derjenigen zum Aufheizen des Wassers bis zur Dampferzeugung erübrigen kann.

Das als "early off" bezeichnete Verfahren liefert mit dem darin auftretenden Temperatureinbruch einen gewissen Energieverlust. Nach einer weiteren vorteilhaften Ausgestaltung der Erfindung kann daher nach dem Schritt o) mit einem weiteren Schritt p) die Heizung und/oder die Pumpe auf einen linearen Temperaturverlauf des Wassers stromab der Heizung zu einem definierten Temperaturzielwert hin geregelt werden. Die Steuerung der Heizung und der Pumpe werden also so aufeinander abgestimmt, dass die Temperatur des Wassers stromab der Heizung sich weitgehend linear entwickelt. Ausgehend von einem festen Zeitpunkt für die Abschaltung der Heizung kann beispielsweise der Durchfluss soweit reduziert werden, dass ein Temperatureinbruch vermieden werden kann. Geht der Durchfluss daraufhin gegen Null, ist das System abgekühlt. Diesem als "controlled early off" bezeichnete Verfahren gelingt es also, ohne eine unkontrollierte Dampfentwicklung und ohne einen großen Temperatureinbruch die Restenergie gezielt abzuführen und einen definierten Ausgangszustand für die Dampferzeugung herzustellen.

Nach einer weiteren vorteilhaften Ausgestaltung der Erfindung, wird das zuletzt genannte Verfahren dahingehend weitergebildet, dass der definierte Temperaturzielwert die Dampftemperatur des Wassers ist. Nach Abschluss des Brühvorgangs werden also die Heizung und die Pumpe allein oder gemeinsam derart geregelt, dass ausgehend vom dann vorliegenden Temperaturniveau das Wasser gezielt, kontrolliert und ohne vorherige Energieabfuhr auf das Niveau der Dampftemperatur gebracht wird. Daran anschließend kann das Temperatur- und Druckniveau dann kontrolliert aufgebaut, gehalten und wieder abgebaut werden.

Nach einer weiteren vorteilhaften Ausgestaltung der Erfindung wird das Verfahren derart an den Brühvorgang angeschlossen, dass es für den Benutzer nicht separat wahrnehmbar ist. Darüber hinaus können einzelne Verfahrensschritte bereits in den Brühvorgang vorverlegt werden, insbesondere wenn es um die Erfassung der Temperaturentwicklung geht. Schließlich kann der Durchfluss durch die Heizung und die dabei erzielte Temperierung des Wassers so eingestellt werden, dass die genannten Vorgänge, also insbesondere die Schritte b) und die Schritte p) noch als Bestandteile des Zubereitungsvorgangs benutzt bzw. der Durchfluss bei der Bemessung der Getränkemenge berücksichtigt wird. Dabei bietet das Verfahren nicht nur eine hohe Betriebssicherheit hinsichtlich der Entwicklung des Dampfstoßes, sondern trägt zu einem geringen Wasser- und Energieverbrauch des Zubereitungsgeräts bei.

Das Prinzip der Erfindung wird im Folgenden anhand einer Zeichnung beispielshalber noch näher erläutert. In der Zeichnung zeigen:
Figur 1: drei beispielhafte Temperaturverläufe nach einem Pumpenstopp,
Figur 2: ein Blockdiagramm eines ersten Verfahrensablaufs,
Figur 3: ein Blockdiagramm eines zweitens Verfahrensablaufs,
Figur 4: einen beispielhaften Leistungs-, Temperatur- und Druckverlauf, und
Figur 5: ein idealer Verlauf der drei Steuerungsgrößen.

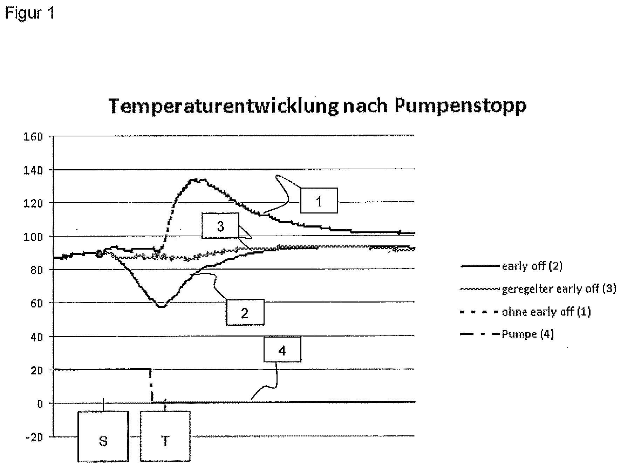

Figur 1 ist eine Darstellung einer Temperaturentwicklung (Ordinate) über die Zeit (Abszisse). Allen Temperaturverläufen (1), (2), (3) ist gemeinsam, dass zu einem bestimmten Zeitpunkt t die Pumpe abgeschaltet wird. Dies symbolisiert der abgewinkelte Verlauf des Grafen (4), wonach vor dem Zeitpunkt t die Pumpe aktiv ist, danach inaktiv. Bei einem ersten Steuerverfahren nach dem Stand der Technik wurde zeitgleich auch die Heizung abgeschaltet. Daraus ergibt sich der Temperaturverlauf (1), bei dem mangels strömenden Wassers in der Heizung sich das jetzt stehende Wasser zügig über den Siedepunkt des Wassers erhitzt und einen Dampfstoß generiert. Damit wird ein großer Teil der Restenergie der Heizung abgegeben, die übrige Energie entweicht beim Nachdampfen, symbolisiert durch den abfallenden Verlauf der Kurve (1) nach dem Dampfstoß.

Eine zweite Möglichkeit gemäß dem Stand der Technik zeigt der Temperaturverlauf (2): Er wird als "early off" bezeichnet, weil abweichend vom ersten Steuerverfahren die Heizung nicht zum Zeitpunkt t und damit gleichzeitig mit der Pumpe, sondern bereits früher, nämlich zum Zeitpunkt s ausgeschaltet wird. Im Gegensatz zum ersten Steuerverfahren, bei dem noch nach dem Abschaltzeitpunkt der Pumpe kurzzeitig der Heizung Heizenergie zugeführt wird, wird zuerst die Heizung abgeschaltet, bevor auch der Durchfluss des Wassers durch die Heizung gestoppt wird. Das hat zur Folge, dass ohne Zufuhr an Heizenergie die Temperatur des Zubereitungswassers, das noch durch die Heizung transportiert wird, sinkt. Sie tut dies bis etwa zum Zeitpunkt t, an dem auch die Pumpe abgeschaltet wird. Mangels Frischwassernachschubs heizt sich das nun stehende Wasser durch Restwärme der Heizung auf, bis sich ein Temperaturgleichgewicht aus der Restenergie der Heizung und dem darin befindlichen, inzwischen erhitzten Wasser einstellt. Der Temperaturverlauf (2) steigt daher nach dem Zeitpunkt t wieder an, bis er sich i.d.R. bei ca. 90 Grad einpendelt.

Zweck der Erfindung ist es, keinen unkontrollierten Dampfstoß zu erzeugen, sondern ihn gezielt und gesteuert herbeizuführen. Dazu ist es zunächst erforderlich, einen definierten Ausgangszustand insbesondere hinsichtlich der Temperatur der Heizung herzustellen. Von ihm ausgehend wird ein konkretes Temperaturprofil und mit ihm ein gesteuertes oder steuerbares Dampfprofil generiert. Erfindungsgemäß wird dazu ein Verfahren zur Erzeugung eines Temperaturverlaufs gemäß (3) durchgeführt, das als "geregelter" bzw. "controlled early off" bezeichnet wird. Auch danach wird die Heizung zum Zeitpunkt s und damit vor dem Zeitpunkt t abgeschaltet. Abweichend jedoch von den bisherigen Verfahren, wird die Pumpe zum Zeitpunkt s geregelt gedrosselt, nämlich in Abhängigkeit von der Temperaturentwicklung, und erst zum Zeitpunkt t vollständig abgeschaltet. Ihre Ansteuerung erfolgt zumindest nach Abschalten der Heizung unter Beachtung des Temperaturverlaufs, so dass sich zunächst eine geringfügige Abkühlung des Zubereitungswassers ergibt. Daran anschließend allerdings wird die Pumpe derart angesteuert, dass sich der Durchfluss gerade soweit reduziert, dass sich stromab der Heizung eine weitgehend konstante Temperatur des Wassers einstellt. Unter der Voraussetzung eines weitgehend stabilen Temperaturniveaus sinkt im weiteren Verlauf der Durchfluss kontinuierlich, bis er zum Erliegen kommt. Dieser Zeitpunkt kann mit einem Durchflussmesser erfasst werden und signalisiert den gewünschten Ausgangszustand durch ein Gleichgewicht zwischen der Temperatur des Wassers und der Temperatur der Heizung. Davon ausgehend kann eine gezielte Ansteuerung zur Dampferzeugung erfolgen. Der "geregelte early off" vermeidet also den Temperatureinbruch des "early off"-Verfahrens und erreicht den gewünschten Gleichgewichts- bzw. Ausgangszustand zu einem früheren Zeitpunkt.

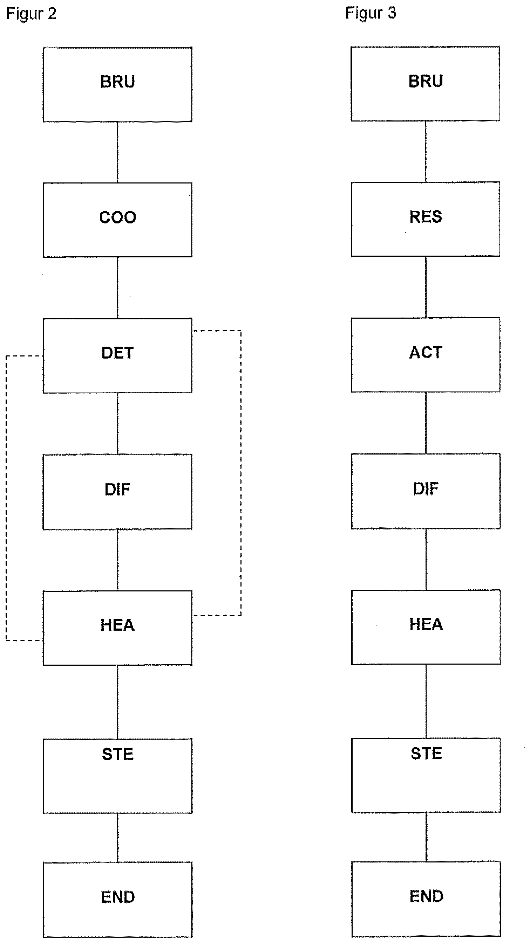

Figur 2 zeigt in einem schematisierten Ablaufdiagramm einzelne Verfahrensschritte des "early off"-Verfahrens: Es beginnt mit einem Verfahrensschritt BRU, bei dem der Brühvorgang zur Zubereitung eines Heißgetränks abgeschlossen ist. Dieser Verfahrensschritt liegt vor dem Zeitpunkt s gemäß Figur 1. Daran schließt sich ein Verfahrensschrift COO an, in dem die Heizung abgekühlt wird. Dazu wird sie abgeschaltet, während die Pumpe noch weiterläuft und kühles Zubereitungswasser nachführt. Daraus resultiert der Temperatureinbruch des Verlaufs (2) gemäß Figur 1, der bis kurz nach dem Abschalten der Pumpe zum Zeitpunkt t reicht.

Anschließend wird eine gewisse Zeitspanne, etwa 2 bis 5 Sekunden entsprechend der Totzeit des Systems, abgewartet, damit sich die zur Figur 1 beschriebene Temperaturangleichung zwischen Heizung und dem darin enthaltenen Wasser ergibt. Anschließend wird in einem Schritt DET die in diesem weitgehenden Gleichgewichtszustand vorliegende Temperatur gemessen, um den Ausgangszustand für die Dampferzeugung zu erfassen.

Anschließend wird im Schritt DIF eine Temperaturdifferenz zwischen dem erfassten Messwert und der Siedetemperatur des Wassers bestimmt. Der Betrag der Temperaturdifferenz korreliert mit einem Energiebetrag, der der Heizung zugeführt werden muss, um das darin enthaltene Wasser zumindest bis zur Siedetemperatur zu erhitzen. Dies geschieht in einem anschließenden Schritt HEA. Das Aufheizen des Wassers wird dabei eine Weile aufrechterhalten, um nicht nur zu einem Zeitpunkt, sondern über eine gewisse Zeitdauer Dampf und den zugehörigen Druck zu erzeugen, dargestellt durch den Verfahrensschritt STE. Damit findet nicht nur das Dampferzeugungsverfahren, sondern der Brühvorgang insgesamt seinen Abschluss im Schritt END.

Alternativ zum Schritt DIF, in dem eine Temperaturdifferenz zwischen der gemessenen Temperatur und der Siedetemperatur bestimmt wird, können der Schritte DET zum Erfassen einer vorliegenden Temperatur und der Schritt HEA zum Aufheizen des Wassers in einer gestrichelt dargestellten Schleife mehrmals durchlaufen werden. Dabei erfolgt das Aufheizen mit einem bestimmten, immer gleichen Energiebetrag. Anschließend wird im Schritt DET die daraus resultierende neue Temperatur erfasst. Die Schleife aus den Schritten DET und HEA wird so lange fortgesetzt, bis im Schritt DET die Siedetemperatur gemessen wird. Anschließend wird das Verfahren mit dem Schritt STE wie oben erwähnt fortgesetzt.

Figur 3 zeigt in einer ebenso schematisierten Weise, das "geregelte early off"-Verfahren: Es beginnt mit dem bereits beschriebenen Verfahrensschritt BRU und schließt den Verfahrensschritt RES an, in dem die Restenergie der Heizung erfasst wird. Dazu werden Daten ausgewertet, die noch vor dem Ende des Brühvorgangs erhoben wurden, beispielsweise eine Temperaturentwicklung oder die angelegte Heizleistung in Verbindung mit dem tatsächlichen Durchfluss. In Kenntnis der tatsächlichen Restenergie, die nach Abschluss des Brühvorgangs vorhanden ist, können nun die Pumpe und die Heizung gezielt angesteuert werden, um einen weitgehend linearen Temperaturverlauf zu erreichen, wofür der Verfahrensschritt ACT steht. Der weitgehend lineare Temperaturverlauf stellt einen stabilen Ausgangszustand dar, von dem aus eine Dampferzeugung vorgenommen wird. Das Niveau des weitgehend gleich bleibenden bzw. konstanten Temperaturverlaufs ist aus der vorhergehenden Erfassung der Restenergie bekannt bzw. erschließbar. Daraus kann eine Temperaturdifferenz in dem bereits erläuterten Schritt DEF ermittelt werden, die bis zur Siedetemperatur überwunden werden muss. Dann schließen sich die ebenfalls bekannten Verfahrensschritte HEA zum Aufheizen des Wassers zu einem Schritt STE an, indem der Dampf für eine Zeitdauer produziert wird. Danach findet das Verfahren sein Ende im Schritt END.

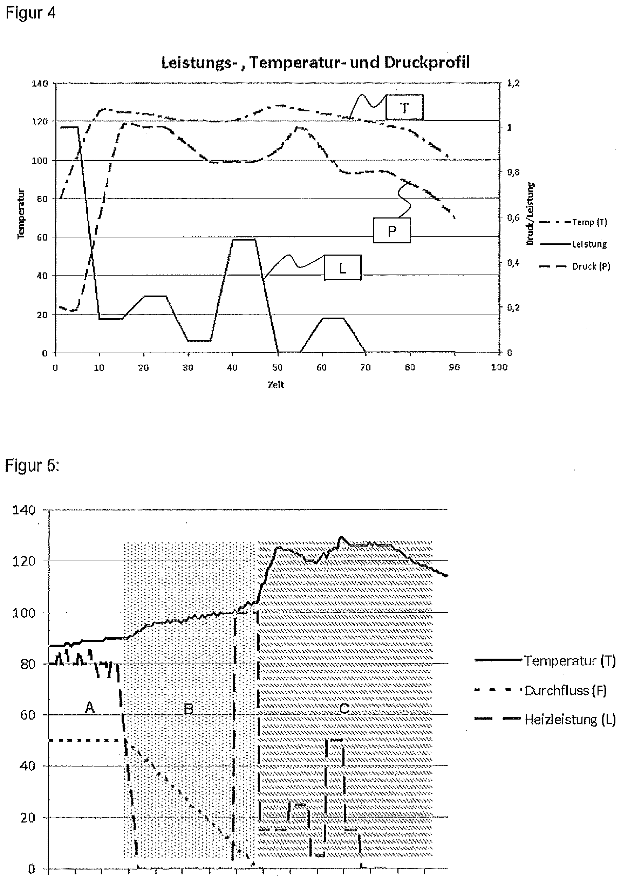

Figur 4 zeigt einen beispielhaften Leistungs-, Temperatur- und Druckverlauf mit einer Zeitachse als Abszisse und einer Temperatur- bzw. Druck- und Leistungsachse als Ordinaten. Er zeigt anhand des polygonzugartigen Verlaufs L für die Heizleistung, dass sie in nach Leistung und Dauer standardisierten Abschnitten, so genannten Energieblöcken, erfolgt. Mit einer gewissen Zeitverzögerung folgen die Antworten des Systems auf die Änderung der Heizleistung, erkennbar an dem Temperaturverlauf T und dem Druckverlauf P. Aufgrund einer gewissen Trägheit des Systems lassen sich trotz des sprunghaften Verlaufs L für die Heizleistung ein weitgehend glatter Verlauf aus T und P für die Temperatur und den Druck erreichen.

Figur 5 veranschaulicht einen Zusammenhang zwischen dem Temperaturverlauf T, der Heizleistung L und einem Durchfluss F während eines "geregelten early off"-Verfahrens. Die Grafik unterteilt sich in drei Bereiche A, B, C, von denen der erste (A) grafisch nicht hinterlegt, der zweite (B) durch eine punktierte Fläche und der dritte (C) durch eine strichlierte Fläche hinterlegt ist. Der erste Bereich A kennzeichnet das Ende des Brühvorgangs, dem ein konstanter Durchfluss F, eine Heizleistung L auf relativ hohem Niveau und eine weitgehend konstante Temperatur T vorliegt. Die Steuerung der Pumpe und der Heizung sind so aufeinander abgestimmt, dass bereits im zweiten Bereich B, bei dem die Heizung abgeschaltet wird, der Durchfluss F so gedrosselt wird, dass das Wasser nicht abkühlt, sondern sogar noch zunehmend erhitzt wird, und zwar bis zur Siedetemperatur. In diesem Abschnitt wird gezielt der Sättigungsdampfdruck des Wassers erzeugt, in dem sich die flüssige und die dampfförmige Phase des Wassers im Gleichgewicht befinden. Das Gleichgewicht beider Phasen in einem geschlossenen System ist dann bekanntlich von der Temperatur abhängig. Dieser Umstand wird zum Erzeugen eines Dampf-Druckprofil genutzt: Kurz bevor der Durchfluss F zum Erliegen kommt, wird die Heizung mit Leistung beaufschlagt. Durch Erhöhen der Temperatur verdampft gerade so viel Wasser und entweicht soviel Wasserdampf, dass wieder ein Gleichgewicht beider Phasen vorliegt. So wird im dritten Abschnitt C allein durch Ansteuerung der Heizung ein gezieltes Dampf-Druckprofil erzeugt, bei dem der Dampfdruck und damit der Dampfstrom weitgehend konstant gehalten werden kann. Dadurch ist außerdem die Zeitdauer nach Abschluss des eigentlichen Brühvorgangs optimal verkürzt, so dass das Entleeren des Systems durch Erzeugen eines Dampfstroms dem Benutzer nicht als eigener Vorgang erscheint, sondern als regelmäßiger Abschluss des Brühvorgangs an sich.

Da es sich bei den vorhergehenden, detailliert beschriebenen Verfahren um Ausführungsbeispiele handelt, können sie in üblicher Weise vom Fachmann in einem weiten Umfang modifiziert werden, ohne den Bereich der Erfindung zu verlassen. Insbesondere können auch die einzelnen Verfahrensschritte des Abkühlens der Heizung und der Temperaturerfassung während des Gleichgewichtszustands in anderer Form als in der hier beschriebenen folgen, insbesondere mithilfe eines weiteren Temperatursensors. Weiterhin schließt die Verwendung der unbestimmten Artikel "ein" bzw. "eine" nicht aus, dass die betreffenden Merkmale auch mehrfach vorhanden sein können.

### Bezugszeichenliste

- BRU:: Ende des Brühvorgangs
- COO:: Abkühlen der Heizung
- DET:: Erfassen der Temperatur
- DEF:: Bestimmen einer Temperaturdifferenz
- HEA:: Aufheizen des Wassers
- STE:: Dampferzeugung
- RES:: Erfassen der Restenergie
- ACT:: Ansteuern der Heizung und/oder der Pumpe
- END:: Ende

- s, t:: Abschaltzeitpunkte für Pumpe und/oder Heizung

- T:: Temperaturverlauf
- P:: Druckverlauf
- L:: Heizleistungsverlauf

- (1): Temperaturentwicklung nach Stand der Technik
- (2): Temperaturentwicklung gemäß "early off"-Verfahren
- (3): Temperaturentwicklung gemäß "geregeltes early off"-Verfahren

## Patentansprüche

1. Verfahren zur Steuerung einer Heißgetränkezubereitungseinrichtung, insbesondere einer solchen für Haushaltszwecke, mit einer Heizung für Wasser, mit einer Pumpe zur Förderung des Wassers in der Zubereitungseinrichtung, mit einem Temperatursensor zur Erfassung der Temperatur des Wassers stromab der Heizung, mit einer Steuereinrichtung zur Steuerung der Heizung und der Pumpe, mit den folgenden Schritten am Ende eines Brühvorgangs:
a) Erfassen der Temperatur des Zubereitungswassers,
b) Aufheizen des Wassers,
c) bis zur Dampferzeugung,
**dadurch gekennzeichnet, dass** ausgehend von der nach Abschluss eines Brühvorgangs vorliegenden Temperatur in der Heizung nach Erfassen der Temperatur gezielt Heizenergie bis zur Bildung von Dampf eingeleitet wird.

2. Verfahren nach Anspruch 1, **dadurch gekennzeichnet, dass** nach dem Schritt a) in einem Schritt k) eine Temperaturdifferenz zwischen der erfassten Temperatur und der Dampftemperatur des Zubereitungswassers bestimmt wird.

3. Verfahren nach Anspruch 1 oder 2 zur Steuerung einer Heißgetränkezubereitungseinrichtung mit einem zweiten Temperatursensor stromauf der Heizung, **dadurch gekennzeichnet, dass** in Schritt a) sowohl eine Eingangstemperatur des Wassers stromauf der Heizung als auch dessen Ausgangstemperatur stromab der Heizung erfasst, daraus in einem Schritt r) eine Differenz gebildet wird, sie in einem Schritt s) mit der dafür investierten Heizenergie ins Verhältnis gesetzt wird, und daraus die erforderliche Heizenergie für Schritt b) ermittelt wird.

4. Verfahren nach Anspruch 1, **dadurch gekennzeichnet, dass** vor der Erfassung der Temperatur in Schritt a) in einem Schritt o) die Heizung abgekühlt wird, indem die Pumpe zeitlich nach der Heizung abgeschaltet wird

5. Verfahren nach einem der obigen Ansprüche, **dadurch gekennzeichnet, dass** vor dem Schritt a) in einem Schritt n) die Restenergie ermittelt wird, indem die Temperaturentwicklung und/oder der Durchfluss des Wassers und/oder die in das Wasser eingebrachte Heizleistung erfasst wird.

6. Verfahren nach Anspruch 4 oder 5, **dadurch gekennzeichnet, dass** nach dem Schritt o) in einem Schritt p) die Heizung und/oder die Pumpe auf einen linearen Temperaturverlauf zu einem definierten Temperaturzielwert hin geregelt werden.

7. Verfahren nach Anspruch 5, **dadurch gekennzeichnet, dass** der Temperaturzielwert die Dampftemperatur des Wassers ist.

## Claims

1. Method for controlling a hot beverage preparation device, in particular one for household purposes, having a heater for water, having a pump for conveying the water in the preparation device, having a temperature sensor for detecting the temperature of the water downstream of the heater, having a control device for controlling the heater and the pump, with the following steps at the end of a brewing operation:
a) detecting the temperature of the preparation water,
b) heating the water,
c) until steam is generated,
**characterised in that,** starting from the temperature present in the heater after the end of a brewing operation, after detecting the temperature, heat energy is introduced specifically until steam forms.

2. Method according to claim 1, **characterised in that** after step a) in a step k), a temperature difference between the detected temperature and the steam temperature of the preparation water is determined.

3. Method according to claim 1 or 2 for controlling a hot beverage preparation device having a second temperature sensor upstream of the heater, **characterised in that** in step a) both an input temperature of the water upstream of the heater and also its output temperature downstream of the heater are detected, these being used in a step r) to form a difference, which is then related in a step s) to the heat energy invested for this purpose, with the heat energy required for step b) being determined therefrom.

4. Method according to claim 1, **characterised in that** before the temperature is detected in step a) in a step o) the heater is cooled **in that** the pump is switched off at a time after the heater.

5. Method according to one of the preceding claims, **characterised in that** before step a) in a step n) the residual energy is determined, **in that** the temperature progression and/or the flow of water and/or the heating power introduced into the water is detected.

6. Method according to claim 4 or 5, **characterised in that** after step o) in a step p) the heater and/or the pump is regulated to a linear temperature profile in the direction of a defined target temperature value.

7. Method according to claim 5, **characterised in that** the target temperature value is the steam temperature of the water.

## Revendications

1. Procédé de commande d'un dispositif de préparation de boissons chaudes, notamment d'un tel dispositif à usage domestique, comprenant un dispositif de chauffage pour l'eau, comprenant une pompe pour le transport de l'eau dans le dispositif de préparation, comprenant un capteur de température destiné à détecter la température de l'eau en aval du dispositif de chauffage, comprenant un dispositif de commande du dispositif de chauffage et de la pompe, comprenant les étapes suivantes à la fin d'une opération de percolation :
a) détection de la température de l'eau de préparation,
b) échauffement de l'eau,
c) jusqu'à la production de vapeur,
**caractérisé en ce que**, en partant de la température présente dans le dispositif de chauffage après l'achèvement d'une opération de percolation, de l'énergie de chauffage, après la détection de la température, est introduite de manière précise jusqu'à la formation de vapeur.

2. Procédé selon la revendication 1, **caractérisé en ce qu'**après l'étape a), une différence de température entre la température détectée et la température de la vapeur de l'eau de préparation est déterminée dans une étape k).

3. Procédé selon la revendication 1 ou 2, destiné à la commande d'un dispositif de préparation de boissons chaudes comprenant un deuxième capteur de température en amont du dispositif de chauffage, **caractérisé en ce qu'**à l'étape a) aussi bien une température d'entrée de l'eau en amont du dispositif de chauffage que la température de sortie de celle-ci en aval du dispositif de chauffage sont détectées, **en ce qu'**à une étape r), une différence en est formée, **en ce qu'**à une étape s), elle est mise en rapport avec l'énergie de chauffage investie à cet effet et qu'à partir de cela l'énergie de chauffage nécessaire pour l'étape b) est déterminée .

4. Procédé selon la revendication 1, **caractérisé en ce qu'**avant la détection de la température à l'étape a), le dispositif de chauffage est refroidi dans une étape o), du fait que la pompe est arrêtée temporairement après le dispositif de chauffage.

5. Procédé selon l'une quelconque des revendications précédentes, **caractérisé en ce qu'**avant l'étape a), l'énergie résiduelle est déterminée dans une étape n), du fait que l'évolution de la température et/ou le débit de l'eau et/ou la puissance de chauffage apportée dans l'eau sont détectés.

6. Procédé selon la revendication 4 ou 5, **caractérisé en ce qu'**après l'étape o), le dispositif de chauffage et/ou la pompe, dans une étape p), sont régulés pour obtenir une valeur cible de température définie sur une courbe de température linéaire.

7. Procédé selon la revendication 5, **caractérisé en ce que** la valeur cible de température est la température de vapeur de l'eau.
